# EUROPEAN PATENT SPECIFICATION

(11) **EP 1 836 133 B1**
(45) Date of publication and mention of the grant of the patent: **21.09.2011**
(21) Application number: 04816676.3
(22) Date of filing: 28.12.2004
(51) Int. Cl.: C02F 3/34, C12R 1/385, C12R 1/11

(54) **A bacterial consortium for the treatment of pulp and paper wastewater**
Ein Konsortium von Bakterien zur Behandlung von Abwasser aus der Papierindustrie
Un consortium de bactéries pour le traitement d'eaux usées issues de l'industrie papetière

(43) Date of publication of application: 26.09.2007
(73) Proprietor: Council of Scientific and Industrial Research, New Delhi 110 001 (IN)
(72) Inventor: KUMAR, Rita, Inst. of G.&I. Biology, Delhi 110 007 (IN); TIKU, Deepa, Lab 506/50, Inst. of Genomics, Delhi 110 007 (IN); SHARMA, Poonam, Inst. of G.&I. Biology, Delhi 110 007 (IN); KUMAR, Anil Inst. of G. I. Biology, Delhi 110 007 (IN); CHATURVEDI, Rekha Inst. of G.&I. Biology, Delhi 110 007 (IN)
(74) Representative: Jones, Elizabeth Louise
(86) International application number: PCT/IN2004/000424
(87) International publication number: WO 2006/070391

(56) References cited:
- WO-A-2004/083410
- GB-A- 2 386 124
- US-A- 4 266 035

## Description

### Field of the invention

The present invention relates to a biological process for reduction of chemical and biological oxygen demand, hereafter referred to as COD and BOD, respectively; of pulp and paper mill effluent using aerobic bacterial strains isolated from specific sources from the selected pulp and paper mill sites.

### Background and prior art

The wastewater from an industry may be organic or inorganic in nature or a combination of both. In most cases, it contains toxic ingredients. The direct effect of wastewater pollution is to deplete, through the excessive organic load, the dissolved oxygen (D.O.) content of receiving waters to the point that the stream becomes incapable of exercising the self-purification processes. The deoxygenation may be high enough to destroy practically all fish and other aquatic life. Such polluted water may also cause sporadic outbreaks of water-borne diseases (Nandan and Raisuddin, 1996). The problem is compounded by the fact that solubility of oxygen in water is very low, less than 12 mg/l. This oxygen comes from two sources, viz. diffusion from the atmosphere at the air/water interface and as a by-product of photosynthesis. Photosynthetic organisms, such as plants and algae, produce oxygen when there is a sufficient light source. During times of insufficient light, these same organisms consume oxygen, resulting in the depletion of DO levels.

Biochemical Oxygen Demand (BOD) and Chemical Oxygen Demand (COD) are indices of the biologically degradable and chemically oxidizable fractions of the wastewater, respectively. These parameters are frequently used to define influent and effluent characteristics as also ensure the wastewater treatment efficiency. These are monitored regularly to give clearance to the discharge of the above wastewaters. Recalcitrant organic matter (ROM), which is presumed by some to be partly responsible for long-term sub-lethal toxicity in receiving waters (Labunska *et al,* 2001); is sometimes represented in terms of a lumped parameter, the COD. COD of the treated effluent is representative of the effectiveness of a treatment technique in its ability to remove the total organic material present in the influent.

BOD is the most widely used measure of the biodegradable organic content (Chee *et al,* 2000) and is usually expressed as the 5-day BOD at 20°C (BOD₅) (APHA, 1998). The determination involves the measurement of dissolved oxygen during the biochemical oxidation of organic matter by the microorganisms at a standard duration and temperature.

Microbes oxidize organic matter to provide themselves with sufficient energy to enable them to synthesize the complex molecules such as proteins and polysaccharides, which are needed to build new cells (Sessa, 1979).

Pulp and paper industry is one of the most important point sources for BOD elevation in the receiving waters; more so because most pulp mills are situated near rivers. The treated effluent is representative of the effectiveness of a treatment technique in its ability to remove the total organic material present in the influent. The contributors to COD in biotreated effluents are not only the non-biodegradable recalcitrant organic matter, but also a certain amount of degradable organic matter, which has resisted biodegradation due to its existence in a state where it was not bioavailable (Konduru et al, 2001).

A recent internal survey within the pulp and paper industry has reported that the COD values of the wastewaters can be as high as 11000 mg/l (Thompson and Forster, 2003). Typical loadings of BOD, COD and solids in the pulp mill effluents depend significantly on:
- nature and cleanliness of the stock
- whether the pulp and paper mill is equipped with a chemical recovery facility
- the bleaching sequences applied and
- the efficiency of the chemical recovery plant, as much as 96% of the COD load can be removed from the pulp cooking liquor.

The pollution load in terms of biological oxygen demand (BOD) from small paper mills is 2-5 times the pollution load from large paper mills equipped with soda recovery. Mills producing paperboard generate relatively lower volumes of wastewater (68-90 1/kg of product) with high BOD (72-82 kg/ton of product) and suspended solids (224-290 kg/ton) as compared to paper mills. Table 1 shows the mean range of concentrations of BOD, COD and SS normally measured in untreated pulp and paper mills.

**Table 1. Mean/Range of concentrations (mg/l) of BOD, COD and Suspended Solids normally measured in untreated pulp and paper mills.**

| **Mill Source** | **BOD** | **COD** | **SS** |
|---|---|---|---|
| *Integrated pulp and paper mills* | 160 | 550 | 230 |
| *Paper mills* | 160-1150 | 310-11000 | 15-3230 |

| | | | |
|---|---|---|---|
| *Source :* Murtedza Mohammed, 1995 | | | |

Biological treatment gives the ideal solution to treatment of wastewaters as less sludge is produced as compared to chemical treatments. Lower daily running costs are also incurred. *Conventional treatment technologies* essentially involve aerobic biological treatment methods.

Researchers across the globe have tried to devise innovative methods for achieving maximum reduction in the BOD and COD loadings of pulp and paper mill wastes.

Although numerous studies have looked at ways to degrade or remove COD and BOD of the pulp and paper effluents, the problem remains (Arcand and Archibald, 1993). COD removal of up to 80% by *Leptothrix ochracea, Pseudomonas multistreata* and *Flavobacterium ochracea,* isolated from activated sludge (Srivastava *et al,* 1995) has been reported. Tarlan et al, 2002, reported the use of algae for removal of COD in the range of 55-60%, however, only after a period of 20 days of retention.

Belsare and Prasad, 1988 reported that the effluent from bagasse based pulp and paper mills, when treated with the white rot fungus, *S.commune,* was able to reduce the BOD and COD of the effluent. However, an additional C-source like sucrose was required for the same with a 2-day incubation period and a pH of 4-5. Many other workers have also reported the use of white rot fungi for reduction of BOD amd COD load of such wastewaters, in addition to decolorization (Kirk *et al,* 1976; Eaton *et al,* 1980; Prasad and Joyce, 1991; Nagarathanamma *et al,* 1999).

Sharma and Bandopadhyaya, 1991, reported that lignin is not easily biodegradable and hence accounts for high COD/BOD ratio. They used an anaerobic filter for the treatment of pulp and paper mill waste and achieved a maximum COD removal of 84.38% for an influent concentration of 4182.5 mg/l. Anaerobic processes are often prescribed as the first pretreatment step for pulp and paper mill wastewaters with increased COD concentrations, in order to meet the corresponding effluent requirements (Babuna *et al,* 1998). According to them, the magnitude of inert fractions in treatment of effluents is more important than the kinetics of the biodegradable part of the influent COD. They described an anaerobic application basis of a newly developed method that identifies separately the soluble and particulate initial inert and residual products. It was concluded that with the mentioned wastewater sample, having a total COD of 13000 mg/l, it is not possible to achieve a lower COD value than 2230 mg/l, which is the sum of the initially inert soluble COD and the soluble residual microbial products under anaerobic conditions. Grover et al, 1999, reported the use of an anaerobic baffled reactor (ABR) and effect of different pH, temperatures, hydraulic retention times and organic loading rates on continuous anaerobic digestion of black liquor from pulp and paper mills. A maximum COD reduction of about 60% at an organic loading rate of 5 kg m⁻³d⁻¹ at a hydraulic retention time of 2 days was recorded.

Ali and Sreekrishnan, 2000, reported reduction of COD and AOX of black liquor and bleach plant effluent from an agroresidue based pulp and paper mill by anaerobic treatment. addiction of 1% w/v glucose however was a necessity as in its absence only about 31% of COD reduction could be achieved. Wagner and Nicell, 2001, reported the treatment of a foul condensate from kraft pulping, with Horse Radish Peroxidase and hydrogen peroxide. Although, a total phenol reduction occurred, the overall COD removal was marginal.

Modifications in the bleaching sequence can lead to reducing the pollutant loading to levels lower than those normally found in the effluents of mills using the conventional bleaching sequence, CEHDED. E.g., when the chlorine delignification stage is preceded by oxygen treatment, the resulting color, BOD and COD levels were found to be 87%, 77% and 76% less than the levels recorded for CEDED (Muhammed, 1995). Certain studies seem to indicate that the residual color in pulp mill effluents may be linked with the recalcitrant COD. Kemeny and Banerjee, 1997 observed a correlation between the end-of-pipe COD and color, whereby suggesting that the residual color might be related to the organic component that is not removed during treatment.

US-A-4266035 discloses a process of decolourizing pulp and paper mill wastewater with a single strain of *"Pseudomonas aeruginosa".*

Till date, there are almost no report regarding the utilization of pure bacterial cultures for bringing down the COD and BOD of pulping effluent The novelty of the present invention is the application of pure culture of bacteria, in the form of a specifically designed synergistic mixture, isolated from natural habitat, for removing COD and BOD of the pulp BOD and paper wastewaters in an industrially and economically viable fashion

### Object of the invention

The main object of the present invention is to provide a process for the aerobic treatment of pulp mill wastewater in terms of reduction of COD and BOD. Another object of the present invention is to provide a bacterial consortium isolated from two different sources from the vicinity of a pulp and paper mill.

### Summary of the invention

The present invention provide a process for the reduction of COD and BOD from a pulp mill effluent using aerobic treatment process. A bacterial consortium comprising aerobic bacterial strains isolated from specific source from the pulp and paper mill was used for reduction of COD and BOD of the pulp mill effluent.

The present invention therefore provides a synergistic bacterial consortium consortium for treatment of pulp and paper industrial wastewater, the consortium comprising three bacterial strains, *Pseudomonas aeruginosa* (DSMZ 03504), *Bacillus megaterium* (MTCC 6544) and *Stenotrophomonas maltophilias* (MTCC 5182).

In one embodiment of the invention, each strain is present in an amount of 20 to 40% by wt.

In another embodiment of the invention, all strains are present in equal proportions. The bacterial strains may be isolated from activated sludge and soil samples collected from vicinity of pulp and paper mills located in India.

*Pseudomonas aeruginosa* (DSMZ 03504) has the following characteristics: Gram-Negative, Shape-rods.

*Bacillus megaterium* (MTCC 6544) has the following characteristics: Gram-Positive, Shape- rods.

*Stenotrdphomonas maltophilia* (MTCC 5182) has the following characteristics: Gram-Negative, Shape-rods.

In another embodiment of the invention, the consortium exhibits 67 to 71% COD removal and 87 to 89% BOD removal.

The present invention also relates to a process for preparing a bacterial consortium for the treatment, of pulp and paper industrial wastewater, the consortium comprising three bacterial strains, *Pseudomonas aeruginosa* (DSMZ 03504), *Bacillus megaterium* (MTCC 6544) and *Stenotropohomonas maltophilia* (MTCC 5182), the process comprising inoculating individual bacterial isolates separately in nutrient broth, incubating the inoculates, mixing the individual cultures after colony formation, centrifuging the resultant cell suspension to form a cell pellet, washing the cell pellet and re-centrifuging to obtain a final cell pellet, and suspending the final cell pellet in phosphate buffer.

In one embodiment of the invention, the nutrient broth contains per litre, 5.0 g of peptic digest of animal tissue; 5.0 g of sodium chloride, 1.5 g of beef extract; 1.5 g of yeast extract and 0.1 ml of Tween 80.

In another embodiment of the invention, incubation of the cell cultures is effected at a temperature in the range of 32-37°C and for approximately 12-18 hours, under gentle shaking at a rpm in the range of 100 - 120.

In another embodiment of the invention, the colony formation is determined by measuring the optical density of all cultures 650 nm at appropriate time intervals till colony formation unit CFU/ml reaches about 10° to form a cell suspension.

In another embodiment of the invention, the cell suspension is centrifuged at an appropriate rpm for a period in the range of 15 to 20 minutes at a temperature ranging between 4-10°C and then washed by dissolving in minimal amount of 50mM phosphate buffer having a pH of 6.8.

In a further embodiment of the invention the cell pellet is recentrifuged at the same conditions as for the first centrifugation.

In a further embodiment of the invention the final pellet is suspended in 50mM. phosphate having a pH 6.8 to form the consortium

The bacteria may be isolated from sources in the vicinity of pulp and paper wastewater and include old activated sludge from plant ETP and soil samples.

In another embodiment of the invention, each strain is present in an amount of 20 to 40% by wt.

In another embodiment of the invention, all strains are present in equal proportions.

In another embodiment of the invention, the consortium exhibits 67 to 71% COD removal and 87 to 89% BOD removal.

The present invention also relates to a process for the treatment of pulp and paper industrial wastewater using a bacterial consortium comprising three bacterial strains, *Pseudomonas aeruginosa* (DSMZ 03504), *Bacillus megaterium* (MTCC 6544) and *Stenotrophomonas maltophilia* (MTCC 5182), the process comprising inoculating pulp and paper industrial wastewater with the bacterial consortium, incubating the bacterial consortium in the wastewater and measuring the COD and BOD demand of the wastewater.

In one embodiment of the invention, the consortium exhibits 67 to 71% COD removal and 87 to 99% BOD removal.

### Detailed description of the invention

The specific bacterial consortium in the said invention is a specially formulated combination of the following bacteria:

| **S.No.** | **Culture** | **Accession No.** |
|---|---|---|
| 1. | *Pseudomonas aeruginosa* | DSMZ 03504 |
| 2. | *Bacillus megaterium* | MTCC 6544 |
| 3. | *Stenotrophomonas maltophilia* | MTCC 5182 |

The main characteristic features of the above bacterial strains are given below:

### Pseudomonas aeruginosa (DSMZ 03504)

This bacterium, *Pseudomonas aeruginosa* (DSMZ 03504) is aerobic in nature, gram negative, motive, motive, shows optimum growth at 35°C, capable of utilizing the Glucose, Gluconate, Adipate, Malate, Mannitol and Citrate as carbon source.

### Bacillus megaterium (MTCC 6544)

This bacterium Bacillus megaterium (MTCC 6544) is a facultative aerobic, mobile, is gram positive, is capable of growth at 15°C -55°.C, is capable of growth at pH 5 - pH.11, is capable of hydrolyzing starch and casein, is catalase positive and produces acids from cellobiose, dextrose, fructose, galactose, inositol, salicin and sorbitol.

### Stenotrophomonas maltophilia (MTCC 5182)

This bacterium, *Stenotrophomonas maltophillia.* (MTCC 5182) is facultative aerobic, is gram negative, is oxidase and catalase positive, shows positive growth in presences of aspergillin and leucine,

The bacterial consortium comprising of the above strains facilitates reduction of COD and BOD load of pulp and paper effluent, lowering these levels to the standard discharge limits set by regulatory authorities. The above-mentioned bacterial strains are deposited at the IMTECH and DSMZ, as stated above and will be mane available to the public on request as per standard official procedures.

The formulated bacterial consortium may contains the bacteria in a preferred embodiment of the invention, in uniform amounts. The microbial consortium of the present invention is useful for biodegradation of pulp and paper wastewaters in terms of reducing the overall COD and BOD load of such wastewaters.

The bacterium described in the invention may be isolated from selected source habitats. The source habitats may include old activated sludge from effluent treatment plant of a pulp and paper mill and soil samples collected from in and around the vicinity of the said mill.

In the present invention, the specifically formulated bacterial consortium may be prepared by inoculating individual bacterial isolates described above, separately in nutrient both containing (per litre), 5.0.g of peptic digest of animal tissue; 5.0 g of sodium chloride, 1.5 g of beef extract; 1.5 g of yeast extract and 0.1 ml of Tween 80. The said cultures are preferably incubated at a temperature of 32-37°C for approximately 12-18 hours, under gentle shaking. Optical density all the cultures is measured at 650 nm after stipulated time intervals. After attaining the required growth in terms of O.D. and a corresponding CFU/ml. (colony forming units/ml) of about 10⁹, the individual cultures are mixed in desired proportions for formulating the consortium. The resultant cell suspension is centrifuged at an appropriate rpm for a period of 20 minutes at a temperature ranging between 4-10°C. The obtained cell pellet washed twice by dissolving in minimum quantity of 50mM phosphate buffer (pH 6.8) and recentrifugation at the above mentioned conditions. The final cell pellet thus obtained is suspended in desired volume of phosphate buffer and stored at a temperature, preferably 4°C, till used.

The formulated microbial consortium prepared in the above said manner can be used as inoculum for treating the pulp and paper industrial wastewater, specifically for the reduction of COD and BOD analysis, performed as per the methods described in the Standard Methods for the Examination of Water and Wastewater (APHA, 1998).

Accordingly the microbial consortium comprises a mixture of at least the following isolated bacterial strains present in equal proportions useful for reducing the oxygen demand (both chemical and biochemical) of the pulp and paper effluent.

A process for the preparation of the microbial consortium is also described herein and comprises
a) isolating a range of bacterial isolates from activated sludge and soil samples collected from the vicinity of a selected pulp and paper mill, according to known methods;
b) culturing the isolates on different media to obtain pure cultures
c) inoculating the isolated bacteria individually in nutrient medium (Ingredients: peptic digest of animal tissue -5g/l ; Sodium Chloride -5g/l; Beef extract- 1.5g/l and Yeast extract -1.5g/l) and incubating them at an ambient temperature under gentle shaking for a period of 12-18 hours;
d) observing the optical density of the grown cultures at 650 nm;
e) harvesting the cells obtained in step (d) by centrifuging for 15-20 minutes at a temperature preferably at 4°C;
f) washing the cell pellet obtained in step (e) by dissolving in 50mM phosphate (pH 6.8-7.2), followed by recentrifugation;
g) repeating step (f) for giving a second washing to the obtained cells;
h) dissolving the pellet obtained from step (g) in desired volume of 50mM phosphate (pH 6.8), to obtain the desired bacterial consortium for reducing the COD and BOD load of pulp and paper wastewater,
i) testing the individual pure cultures of the isolated bacterial strains as obtained in step (h) for their biodegradative capability in reducing the COD and BOD load of pulp and paper wastewaters (COD and BOD was estimated according to *Standard Methods for the Examination of Water and Wastewater*, 20^{th} edn. 5-1-5-6. Baltimore);
j) selecting the bacterial strains with the maximum capacity to reduce the COD and BOD load of the pulp and paper mill wastewaters;
k) mixing the bacterial strains selected in step (j) in various combinations to obtain different microbial consortia;
l) obtaining the cell pellets of each microbial consortium in the manner as described in steps (c), (d), (e), (f), (g) and (h);
m) testing the consortia as obtained in step (I) for treating the pulp and paper wastewaters for reduction of COD and BOD load (COD and BOD was estimated according to *Standard Methods for the Examination of Water and Wastewater*, 20^{th} edn. 5-1-5-6. Baltimore):
n) Selecting the best consortia from the results in step (m) In an example of this method, the bacterial consortium comprises a synergistic mixture of the following bacterial strains, viz. *Pseudomonas aeruginosa* (DSMZ 03504), *Bacillus megaterium* (MTCC 6544) and *Stenotrophomonas maltophilia* (MTCC, 5182). The bacterial strains were isolated from the source habitat, which are the old activated sludge and soils from selected pulp and paper industry The isolated bacteria were cultured on nutrient medium (ingredients: peptic digest of animal tissue -5g/l ; Sodium Chloride -5g/l; Beef extract- 1.5g/l and Yeast extract -1.5g/l) to obtain pure cultures. The individual bacteria isolated were inoculated separately in nutrient medium followed by incubation at 30-37°C for 12-18 hours at 100-120 rpm. The OD of the grown bacterial strains is observed at 650 nm. The obtained cell suspension having desired optical density is centrifuged at an appropriate rpm, preferably at 6000 rpm, for 15-20 minutes to form a pellet. The pellet is washed and then dissolved in desired volume of 50mM phosphate (pH 6.8), to obtain the desired bacterial consortium for reducing the COD and BOD load of pulp and paper wastewater.

The individual pure cultures of the isolated bacterial strains were tested for reducing the COD and BOD load of pulp and paper wastewater. Only bacterial strains with maximum capacity to reduce COD and BOD load of the pulp and paper mill wastewater, were selected. The selected bacterial strains were mixed in various combinations to obtain different microbial consortia and cell pellets of each microbial consortium were obtaining in the manner described above. The obtained consortia were tested for treating the pulp and paper wastewaters for reduction of COD and BOD load and the optimal was selected from the obtained results.

The invention further described with references to the following illustrative examples and shall not be construed to limit the scope of the invention.

### Example 1

Old activated sludge obtained from the Effluent Treatment Plant (ETP) of a selected pulp and paper mill (Century pulp and paper mill, Lal Kuan, Uttaranchal), was selected for the isolation of bacteria. 5.0 grams of homogenized activated sludge taken from effluent treatment plant of pulp and paper mill is inoculated in the enrichment medium. The enrichment medium consists of 100 ml of sludge infusion, 25 ml of sterile nutrient broth and 0.1% (w/v) each of lignin (Alkali lignin-Aldrich, USA), vanillin and tannin (Sigma). The pH is adjusted to 6.8±0.2. Sludge extract is prepared by boiling a mixture containing 300 ml of sludge in 1200 ml of triple distilled water for about 30 minutes. The infusion was cooled, centrifuged and coarse filtered. The final filtrate obtained is autoclaved at 121°C, 15 psi for 20 minutes and used for preparing the enrichment medium. Enrichment medium inoculated with activated sludge is incubated at 37°C for 24-48 hours to obtain an enriched culture.

Different media were chosen for the isolation, which are listed below:
i) Sludge infusion + 2% agar
ii) Sludge infusion + 0.2% each of alkali lignin (Sigma Aldrich), tannin and vanillin +2% agar
iii) Sludge infusion + nutrient broth in a ratio 1:1) + 2% agar
iv) Effluent + 2% agar
v) Nutrient broth + 0.2% each of lignin, tannin and vanillin + 2% agar
vi) Nutrient agar (Ingredients: peptic digest of animal tissue -5g/l ; Sodium Chloride -5g/; Beef extract- 1.5g/l; Yeast extract-1.5g/l and 20g/l agar)
vii) Sludge infusion + inorganic nutrients

**Per litre composition:**

| | | |
|---|---|---|
| Sludge infusion | : | 400 ml |
| KH₂PO₄ | : | 7.5 g |
| MgSO₄.7H₂O | : | 0.5 g |
| Agar | : | 20 g |
| Glucose | : | 3.0 g |
| Triple distilled Water | : | 600 ml |

Enriched culture is serially diluted to 10-¹² using 0.05M NaH₂PO₄-Na₂HPO₄ buffer, pH 6.8. Serially diluted inoculum is then plated and incubated at 37°C for 24-48 hours. Single isolated colony is picked and streaked on a fresh plate in the same medium. The above step is repeated twice, till pure colonies are obtained. Total 20 bacterial isolates were isolated for further experimentation. (Table 1.1)

**Table 1.1: Bacterial isolates from old activated sludge obtained from Effluent Treatment Plant (ETP)**

| **SI.No.** | **Bacterial Isolates** |
|---|---|
| **1.** | Isolate A1 |
| **2.** | Isolate A2 |
| **3.** | Isolate A3 |
| **4.** | Isolate A4 |
| **5.** | Isolate A5 |
| **6.** | Isolate A6 |
| **7.** | Isolate A7 |
| **8.** | Isolate A8 |
| **9.** | Isolate A9 |
| **10.** | Isolate A10 |
| **11.** | Isolate A11 |
| **12.** | Isolate A12 |
| **13.** | Isolate A13 |
| **14.** | Isolate A14 |
| **15.** | Isolate A15 |
| **16.** | Isolate A16 |
| **17.** | Isolate A17 |
| **18.** | Isolate A18 |
| **19.** | Isolate A19 |
| **20.** | Isolate A20 |

### Example 2

Soil samples from the vicinity of a selected pulp and paper mill (Century pulp and paper mill, Lal Kuan, Uttaranchal), was selected for the isolation of autochthonous bacterial population. Different media were chosen for the isolation as listed below:
i) Soil extract + 2% agar
ii) Soil extract + 0.2% alkali lignin (Sigma Aldrich)
iii) Soil extract + nutrient broth in a ratio 1:1) + 2% agar
iv) Soil extract + 0.2% xylan + 2% agar

5.0 g of fresh soil from the above said site was inoculated in the enrichment medium. Enrichment medium was prepared by adding 75 ml of soil extract to 150 ml of Nutrient Broth (Ingredients: peptic digest of animal tissue -5g/l; Sodium Chloride -5g/l; Beef extract- 1.5g/l and Yeast extract -1.5g/l). To this, 5 ml each of 0.1% (v/v) of lignin and cellulose were added along with 100 µl of Candid B, autoclaved at 15 1bs for 20 minutes at 121°C. The above medium was kept at 120 rpm for 48 hours at 30°C.

Soil Extract was prepared from the soil collected from the above site. 1 kg of the soil was dried at 50°C for 2 hrs. 400 gm of the dried soil was autoclaved with 960 ml single distilled water for 1 hr at 15 lbs. After autoclaving, the sample was centrifuged at 5000 rpm for 10 minutes at 5°C. The supernatant (extract) was collected and stored in sterile containers for preparation of medium for isolation. The enriched soil samples are serially diluted in Na₂HPO₄ - NaH₂PO₄ buffer (pH 6.8, 0.05 M). 100 µl from each respective dilution was spread plated in duplicates on media plates. The plates thus obtained were incubated at 30 ± 2°C for 16- 24 hrs in an inverted position. The single isolated colonies were picked and streaked on fresh plates containing the same medium. The above step was repeated till pure colonies are obtained. Total 18 bacterial isolates were isolated for further experimentation. (Table 2.1)

**Table 2.1: Bacterial isolates from soil from the vicinity of a pulp and paper mill (Century pulp and paper mill, Lal Kuan, Uttaranchal, India)**

| **SI.No.** | **Bacterial Isolates** |
|---|---|
| **1.** | Isolate B1 |
| **2.** | Isolate B2 |
| **3.** | Isolate B3 |
| **4.** | Isolate B4 |
| **5.** | Isolate B5 |
| **6.** | Isolate B6 |
| **7.** | Isolate B7 |
| **8.** | Isolate B8 |
| **9.** | Isolate B9 |
| **10.** | Isolate B10 |
| **11.** | Isolate B11 |
| **12.** | Isolate B12 |
| **13.** | Isolate B13 |
| **14.** | Isolate B14 |
| **15.** | Isolate B15 |
| **16.** | Isolate B16 |
| **17.** | Isolate B17 |
| **18.** | Isolate B18 |

### Example 3

For preliminary studies, three consortia were formulated comprising of three bacteria each and screened for COD and BOD reduction of the pulp and paper mill wastewater.

The treatabilty experiment was set up in batch cultures in conical shake flasks at 37°C at 120 rpm for a period of five days. 100 ml sterile NB was inoculated with 100 µl of respective mother cultures and incubated at 37° C / 120 rpm for 16-18 hours. The initial and final optical densities at 650 nm were noted. Cultures were harvested at an OD₆₅₀ of 1.0 by centrifuging at 6000 rpm for 20 minutes at 4°C. The pellet obtained was washed twice, using sterile phosphate buffer (pH 6.8 0.05 M) and resuspended in small volume of the same. This suspension was then used for treatability assay in a ratio of 1:1, i.e., 100 ml of effluent sample was treated with pellet obtained from 100 ml of culture media. Control flasks without any additional inoculum were also maintained and results compared with these samples. COD and BOD levels were analysed over a period of five days according to the standard procedure as mentioned in APHA APHA (*Standard Methods for the Examination of Water and Wastewater*, 20^{th} edn. 5-1-5-6. Baltimore). Increase in these levels was observed in all the test samples, on addition of biomass, as biomass itself exerted COD and BOD. The 0-day samples exhibited much higher initial COD and BOD values as compared to the control sample run in parallel. This resulted in erroneous results (Table 3.1). Hence in all the future experiments a modified analysis method was employed.

**Table 3.1: Preliminary screening of 3 consortia formulated from different bacteria isolated from Century and Shiva paper mills wastewater for reduction of COD of Star Mill Inlet wastewater over a period of 5 days.**

| **Bacterial consortia** | **COD (mg/l)** | |
|---|---|---|
| | **0 day** | **5^{th} day** |
| **C1** | 1510 | 1195 |
| **C2** | 1012 | 815 |
| **C3** | 1274 | 998 |
| **Control** | **892** | **906** |

### Example 4: Biodegradation in terms of BOD and COD of pulp and paper industrial waste water using 12 formulated microbial consortia

Biodegradation experiments were set up in batch cultures in conical shake flasks at 37⁰°C at 120 rpm for a period of five days. 100 ml sterile NB was inoculated with 100 µl of respective mother cultures and incubated at 37° C / 120 rpm for 16-18 hours. The initial and final optical densities at 650 nm were noted. Cultures were harvested at an OD₆₅₀ of 1.0 by centrifuging at 6000 rpm for 20 minutes at 4°C. The pellet obtained was washed twice, using sterile phosphate buffer (pH 6.8 0.05 M) and resuspended in small volume of the same. This suspension was then used for treatability assay in a ratio of 1:1, i.e., 100 ml of effluent sample was treated with pellet obtained from 100 ml of culture media. Control flasks without any additional inoculum were also maintained and results compared with these samples. COD and BOD levels were analysed over a period of five days according to the standard procedure as mentioned in APHA APHA (*Standard Methods for the Examination of Water and Wastewater*, 20^{th} edn. 5-1-5-6. Baltimore). Increase in these levels was observed in all test samples, on addition of biomass, as biomass itself exerted COD and BOD. 0-day samples exhibited much higher initial COD and BOD values as compared to the control sample run in parallel. Tables 3.2a and 3.2b show biodegradative capability of 12 chosen consortia.

**Table 3.2(a) Screening of consortia formulated from isolated bacteria for reduction of COD of inlet waste water of Star Paper Mill (Located in Saharanpur, India) over a period of 5 days.**

| **Bacterial consortia** | **COD (mg/l)** | **% reduction** |
|---|---|---|
| **C1** | 198 | 67.0 |
| **C2** | 136 | 77.3 |
| **C3** | 115 | 80.8 |
| **C4** | 154 | 74.3 |
| **C5** | 314 | 47.7 |
| **C6** | 372 | 38.0. |
| **C7** | 300 | 50.0 |
| **C8** | 370 | 38.3 |
| **C9** | 228 | 62.0 |
| **C10** | 272 | 54.7 |
| **C11** | 280 | 53.3 |
| **C12** | 274 | 54.3 |
| **Control** | **600** | |

**Table 3.2(b) Screening of consortia formulated from isolated bacteria for reduction of COD of inlet wastewater of Century Paper Mill (Located in Nainital, India) over a period of 5 days.**

| **Bacterial consortia** | **BOD (mg/l)** | **%reduction** |
|---|---|---|
| **C1** | 27 | 93.3 |
| **C2** | 20 | 95.0 |
| **C3** | 10 | 97.5 |
| **C4** | 16 | 96.0 |
| **C5** | 28 | 93.1 |
| **C6** | 15 | 96.3 |
| **C7** | 17 | 95.8 |
| **C8** | 19 | 95.3 |
| **C9** | 17 | 95.8 |
| **C10** | 12 | 97.1 |
| **C11** | 15 | 96.3 |
| **C12** | 17 | 95.8 |
| **Control** | **403** | |

### Example 5

Six different bacterial consortia (each consortium containing 3 bacteria) were then formulated comprising of bacteria isolated from different sources and screened for their ability to reduce the COD and BOD of the Century inlet ETP samples. These consortia were able to bring the COD levels down to standard levels, but only after a 3-day period. The results are depicted in Table 3.3 (a) and (b). Since, for any effective industrial treatment technology, time of retention is an important factor, efforts were made to improve the same.

**Table 3.3(a) Screening of 6 consortia formulated from different bacterial isolates for reduction of COD of Century Paper Mill Inlet wastewater over a period of 5 days.**

| **Bacterial consortia** | **COD (mg/l)** | | |
|---|---|---|---|
| | **0 day** | **3^{rd} day** | **5^{th} day** |
| **Consortium 1** | 294 | 175 | 140 |
| **Consortium 2** | 325 | 161 | 144 |
| **Consortium 3** | 290 | 118 | 142 |
| **Consortium 4** | 375 | 136 | 120 |
| **Consortium 5** | 327 | 205 | 124 |
| **Consortium 6** | 309 | 163 | 177 |
| **Control** | **337** | 310 | 295 |

**Table 3.3(b) Screening of 6 consortia formulated from different bacterial isolates for reduction of BOD of Century Paper Mill Inlet wastewater over a period of 5 days.**

| **Bacterial consortia** | **BOD (mg/l)** | | |
|---|---|---|---|
| | **0 day** | **3^{rd} day** | **5^{th} day** |
| **Consortium 1** | 163 | 20 | 14 |
| **Consortium 2** | 157 | 12 | 9 |
| **Consortium 3** | 123 | 13 | 7 |
| **Consortium 4** | 171 | 10 | 6 |
| **Consortium 5** | 191 | 9 | 2 |
| **Consortium 6** | 181 | 40 | 10 |
| **Control** | 216 | 10 | 29 |

### Example 6

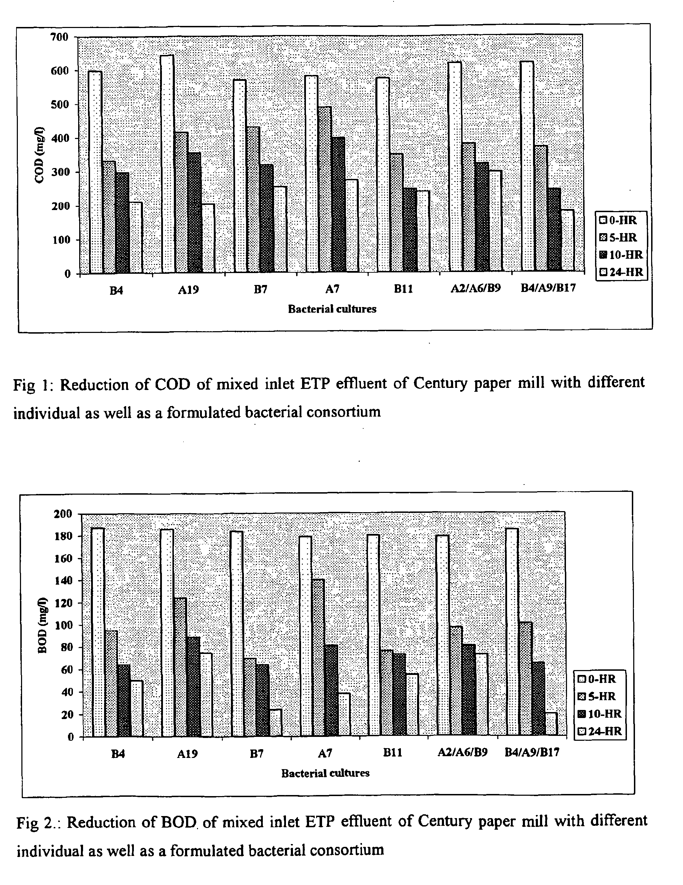

Reduction in BOD and COD of the mixed inlet ETP samples from Century paper mill was assessed by treating them with freshly isolated isolates, both as individual as well as formulated in the form of mixed bacterial consortia. Samples inoculated with the above combinations of bacteria were incubated at 37°C for a period of 24 hours at 120 rpm and sampled at different time intervals. The results are presented in Fig. 3.4(a) and (b). As is evident from the results, isolates A7 and B7 were found to be reducing the BOD levels to the standard discharge limits within 24 hours. Isolate B 17 could bring down the COD by 60% (from 620 mg/l to 247 mg/l), well within discharge limits, within 10 hours. Isolates B4, A19 AND B7 reduced COD values by 65.9%, 67.2% and 59.3%, respectively. The consortium formulated by combining the three bacterial isolates, B4, A9 and B 17 exhibited better results as compared to their individual components, with the COD level of the sample going down to 180 mg/l and the BOD levels coming down to 20 mg/l, both values falling well within the discharge limits (Figures 1 and 2).

### Example 7

The consortium formulated by combining the three bacterial isolates, B4, A9 and B17, exhibited better results as compared to their individual components, with the COD level of the sample going down to 180 mg/l and the BOD levels coming down to 20 mg/l, both values falling well within the discharge limits. The bacterial strains comprised in this consortium were identified as *Pseudomonas aeruginosa* (DSMZ 03504), *Bacillus megaterium* (MTCC 6544) and Stenotrophomonas maltophilia which are deposited at International Depository at IMTECH, Sector 39A, Chandigarh, India.

### Advantages

1. The selected formulated bacterial consortium comprising of the isolated bacterial strains, act in a synergistic way and is capable of degrading the easily assimilable as well as the refractory organic compounds present in pulp and paper wastewater.
2. This consortium is capable of effectively reducing the pollutional load of the pulp and paper wastewaters, in terms of COD and BOD within the desired discharge limits.
3. The use of such specific consortia can overcome the inefficiencies of the conventional biological treatment facilities currently operational in the pulp and paper mills.

## Claims

1. A synergistic bacterial consortium for treatment of pulp and paper industrial wastewater, the consortium comprising three bacterial strains, *Pseudomonas aeruginosa* (DSMZ 03504), *Bacillus megaterium* (MTCC 6544) and *Stenotrophomonas maltophilia* (MTCC 5182).

2. A bacterial consortium as claimed in claim 1 wherein each strain is present in an amount of 20 to 40% by wt.

3. A bacterial consortium as claimed in claim 1 wherein all strains are present in equal proportions.

4. A bacterial consortium as claimed in claim 1 wherein the consortium exhibits 67 to 71 % COD removal and 87 to 89 % BOD removal from pulp and paper industrial wastewater.

5. A process for the formation of a bacterial consortium as claimed in any one of claims 1 to 4, the process comprising inoculating individual bacterial isolates of claim 1 separately in nutrient broth, incubating the inoculates, mixing the individual cultures after colony formation, centrifuging the resultant cell suspension to form a cell pellet, washing the cell pellet and re-centrifuging to obtain a final cell pellet, and suspending the final cell pellet in phosphate buffer.

6. A process as claimed in claim 5 wherein the nutrient broth contains per litre, 5.0 g of peptic digest of animal tissue; 5.0 g of sodium chloride; 1.5 g of beef extract; 1.5 g of yeast extract and 0.1 ml of Tween 80.

7. A process as claimed in claim 5 wherein the incubation of the cell cultures is effected at a temperature in the range of 32-37°C and for approximately 12-18 hours, under gentle shaking at an rpm in the range of 100 - 120.

8. A process as claimed in claim 5 wherein the colony formation is determined by measuring the optical density of all cultures at 650 mn at appropriate time intervals until colony formation unit CFU/ml reaches about 10° to form a cell suspension.

9. A process as claimed in claim 5 wherein the cell suspension is centrifuged at an appropriate rpm for a period in the range of 15 to 20 minutes at a temperature ranging between 4-10°C to form a cell pellet.

10. A process as claimed in claim 5 wherein the cell pellet is washed by dissolving in a minimal amount of 50mM phosphate buffer having a pH of 6.8.

11. A process as claimed in claim 5 wherein the washed cell pellet is recentrifuged at an appropriate rpm for a period in the range of 15 to 20 minutes at a temperature ranging between 4-10°C to form a final cell pellet.

12. A process as claimed in claim 5 wherein the final pellet is suspended in 50mM phosphate having a pH 6.8 to form the consortium.

13. A process for the treatment of pulp and paper industrial wastewater using a bacterial consortium as claimed in claim 1, the process comprising inoculating pulp and paper industrial wastewater with the bacterial consortium, incubating the bacterial consortium in the wastewater and measuring the COD and BOD demand of the wastewater.

## Patentansprüche

1. Synergistische Bakterienvereinigung bzw. synergistisches Bakterienkonsortium für die Behandlung von Zellstoff- und Papierindustrieabwasser, wobei die Vereinigung drei Bakterienstämme, *Pseudomonas aeruginosa* (DSMZ 03504), *Bacillus megaterium* (MTCC 6544) und *Stenotrophomonas maltophilia* (MTCC 5182), aufweist.

2. Bakterienvereinigung nach Anspruch 1, wobei jeder Stamm in einer Menge von 20 bis 40 Gew.-% vorliegt.

3. Bakterienvereinigung nach Anspruch 1, wobei alle Stämme in gleichen Anteilen vorliegen.

4. Bakterienvereinigung nach Anspruch 1, wobei die Vereinigung 67 bis 71 % COD-Entfernung und 87 bis 89 % BOD-Entfernung aus Zellstoff- und Papierindustrieabwasser aufzeigt.

5. Verfahren für die Bildung einer Bakterienvereinigung nach einem der Ansprüche 1 bis 4, wobei das Verfahren separates Inokulieren von individuellen Bakterienisolaten nach Anspruch 1 in Nährbrühe, Inkubieren der Inokulate, Mischen der individuellen Kulturen nach Koloniebildung, Zentrifugieren der resultierenden Zellsuspension unter Bildung eines Zellpellets, Waschen des Zellpellets und erneutes Zentrifugieren zum Erhalten eines endgültigen Zellpellets und Suspendieren des endgültigen Zellpellets in Phosphatpuffer umfasst.

6. Verfahren nach Anspruch 5, wobei die Nährbrühe pro Liter 5,0 g peptisches Extrakt von Tiergewebe; 5,0 g Natriumchlorid; 1,5 g Rindfleischextrakt; 1,5 g Hefeextrakt und 0,1 ml Tween 80 enthält.

7. Verfahren nach Anspruch 5, wobei die Inkubation der Zellkulturen bei einer Temperatur im Bereich von 32-37 °C und für ungefähr 12-18 Stunden unter sanftem Schütteln mit einer Drehzahl im Bereich von 100 - 120 durchgeführt wird.

8. Verfahren nach Anspruch 5, wobei die Koloniebildung durch Messen der optischen Dichte aller Kulturen bei 650 nm in geeigneten Zeitintervallen, bis die Koloniebildungseinheit CFU/ml etwa 10° erreicht, unter Bildung einer Zellsuspension bestimmt wird.

9. Verfahren nach Anspruch 5, wobei die Zellsuspension mit einer geeigneten Drehzahl für eine Dauer im Bereich von 15 bis 20 Minuten bei einer Temperatur im Bereich zwischen 4 und 10 °C unter Bildung eines Zellpellets zentrifugiert wird.

10. Verfahren nach Anspruch 5, wobei das Zellpellet durch Auflöten in einer minimalen Menge von 50 mM Phosphatpuffer mit einem pH-Wert von 6,8 gewaschen wird.

11. Verfahren nach Anspruch 5, wobei das gewaschene Zellepellet mit einer geeigneten Drehzahl für eine Dauer im Bereich von 15 bis 20 Minuten bei einer Temperatur im Bereich zwischen 4 und 10 °C unter Bildung eines endgültigen Zellpellets erneut zentrifugiert wird.

12. Verfahren nach Anspruch 5, wobei das endgültige Pellet in 50 mM Phosphat mit einem pH-Wert von 6,8 unter Bildung der Vereinigung suspendiert wird.

13. Verfahren für die Behandlung von Zellstoff- und Papierindustrieabwasser unter Verwendung einer Bakterienvereinigung nach Anspruch 1, wobei das Verfahren das Inokulieren von Zellstoff- und Papierindustrieabwasser mit der Bakterienvereinigung, das Inkubieren der Bakterienvereinigung im Abwasser und das Messen des COD- und BOD-Bedarfs des Abwassers umfasst.

## Revendications

1. Consortium de bactéries synergistiques pour le traitement d'eaux usées issues de l'industrie papetière, le consortium comportant trois souches bactériennes, *Pseudomonas aeruginosa* (DSMZ 03504), *Bacillus megaterium* (MTCC 6544) et *Stenotrophomonas maltophilia* (MTCC 5182).

2. Consortium de bactéries selon la revendication 1, dans lequel chaque souche est présente dans une quantité de 20 à 40 % en poids.

3. Consortium de bactéries selon la revendication 1, dans lequel toutes les souches sont présentes en proportions égales.

4. Consortium de bactéries selon la revendication 1, dans lequel le consortium présente une extraction de 67 à 71 % de COD et une extraction de 87 à 89 % de BOD des eaux usées issues de l'industrie papetière.

5. Procédé pour la formation d'un consortium de bactéries selon l'une quelconque des revendications 1 à 4, le procédé comportant l'inoculation d'isolats de bactéries individuels selon la revendication 1 séparément dans un bouillon de culture, l'incubation des isolats inoculés, le mélange des cultures individuelles après la formation de colonies, la centrifugation de la suspension cellulaire obtenue en résultat afin de former un culot de cellules, le lavage du culot de cellules et la recentrifugation afin d'obtenir un culot de cellules final, et la suspension du culot de cellules final dans un tampon de phosphate.

6. Procédé selon la revendication 5, dans lequel le bouillon de culture contient par litre, 5,0 g de digesté peptique de tissu animal ; 5,0 g de chlorure de sodium ; 1,5 g d'extrait de viande, 1,5 g d'extrait de levure et 0,1 ml de Tween 80.

7. Procédé selon la revendication 5, dans lequel l'incubation des cultures cellulaires est effectuée à une température comprise dans la plage de 32 à 37°C pendant approximativement 12 à 18 heures, sous un léger secouage à un tr/min compris dans la plage de 100 à 120.

8. Procédé selon la revendication 5, dans lequel la formation de colonies est déterminée en mesurant la densité optique de toutes les cultures à 650 nm selon des intervalles de temps appropriés jusqu'à ce que l'unité de formation de colonies CFU/ml atteigne environ 10 % afin de former une suspension cellulaire.

9. Procédé selon la revendication 5, dans lequel la suspension cellulaire est centrifugée à un tr/min approprié pendant une période comprise dans la plage de 15 à 20 minutes à une température comprise entre 4 et 10°C afin de former un culot de cellules.

10. Procédé selon la revendication 5, dans lequel le culot de cellules est lavé en le dissolvant dans une quantité minimale de tampon de phosphate de 50mM ayant un pH de 6,8.

11. Procédé selon la revendication 5, dans lequel le culot de cellules est recentrifugé à un tr/min approprié pendant une période comprise dans la plage de 15 à 20 minutes à une température comprise entre 4 et 10°C afin de former un culot de cellules final.

12. Procédé selon la revendication 5, dans lequel le culot final est suspendu dans du phosphate 50mM ayant un pH de 6,8 afin de former le consortium.

13. Procédé pour le traitement d'eaux usées issues de l'industrie papetière utilisant un consortium de bactéries selon la revendication 1, le procédé comportant l'inoculation des eaux usés issues de l'industrie papetière avec le consortium de bactéries, l'incubation du consortium de bactéries dans les eaux usées et la mesure de l'exigence en COD et BOD des eaux usées.
